# EUROPEAN PATENT APPLICATION

(11) **EP 4 186 730 A1**
(43) Date of publication of application: **31.05.2023**
(21) Application number: 22209988.9
(22) Date of filing: 28.11.2022
(51) Int. Cl.: B60K 35/00, B60K 37/06, E02F 9/26, E02F 9/20

(54) **A WORK VEHICLE**

(30) Priority: 29.11.2021 IT 202100030119
(71) Applicant: CNH Industrial Italia S.p.A., 10156 Torino (IT)
(72) Inventor: MANTOVANI, Michele, 46026 Quistello (MN) (IT); TAGLIAZUCCHI, Alessandro, 41018 San Cesario Sul Panaro (MO) (IT); LEATI, Eugenio, 41121 Modena (IT)
(74) Representative: CNH Industrial IP Department

(57) **Abstract**

A work vehicle (1) includes at least one pair of wheels (2), an operative assembly (4, 7, 8, 9) configured to drive, steer, brake, and suspend the wheels (2), a hydraulic assembly (13) being apart from the operative assembly and comprising at least one hydraulic device (14), determination means (15) for determining a quantity indicative of a speed of the work vehicle (1); and a control unit (16) configured to acquire a piece of information associated to the determined quantity from the determination means (15), and to output a locking signal based on the acquired piece of information; the locking signal being useful for locking an operation of the hydraulic device (14).

## Description

### TECHNICAL FIELD

The invention concerns a work vehicle, in particular a locking apparatus for locking hydraulic devices of the work vehicle.

The invention also concerns a method for controlling the work vehicle, a computer program implementing the method, and a computer readable medium storing the computer program.

### BACKGROUND OF THE INVENTION

As commonly known, a typical work vehicle like a tractor or a wheel loader is provided with a plurality of implements, tools, or mechanisms carrying out a variety of functions that are not linked, as such, to the advancing of the vehicle on road or on fields.

For example, those implements include the ones that are normally carried by the front and rear hitches of the vehicle, such as mowers, spreaders, sprayers, harrows, and the like.

Similarly, a mechanism like an articulated arm for maneuvering a bucket or other suitable tools can be operated in an independent manner to the advancing of the vehicle.

Some of the above implements, tools, or mechanisms are operated or at least displaced through hydraulic devices, such as actuators or valves, which form a hydraulic assembly.

In particular, the implements attached to the hitches can be moved through the hitches themselves, which comprise hydraulic lifters to raise and lower the implements.

Similarly, the above-mentioned articulated arm is typically driven hydraulically.

Usually, a cab of the work vehicle has an instrument panel or dashboard including a hydraulic master switch with an on-position and an off-position.

When the master switch is put in the off-position by the driver, the hydraulic assembly is locked, which means that the movements of the related implements, tools, or mechanisms are fully inhibited.

In particular, the movements are not carried out even if they should be accidentally commanded by the driver using corresponding command members of the dashboard.

Therefore, the master switch represents a safety command that is available to the driver when he or she desires to disable the command members for operating the hydraulic assembly, e.g. when sure that driving or moving the related implements, tools, or mechanisms is useless or even dangerous for the vehicle and people or objects around there, for example when the vehicle is travelling on road to reach a working area.

In this framework, the need is felt to improve further the safety of the vehicle, possibly in a simple and cost effective fashion.

An object of the invention is to satisfy at least the need above.

### SUMMARY OF THE INVENTION

The object is reached by a work vehicle and a method as defined by the independent claims.

Dependent claims set out particular embodiments of the invention.

### BRIEF DESCRIPTION OF DRAWINGS

For a better understanding of the invention, specific embodiments are described in the following by way of nonlimiting examples, with reference to the attached drawings wherein:
- Figure 1 is a lateral view of a work vehicle according to the invention;
- Figure 2 is a front view of a dashboard within a cab of the work vehicle;
- Figure 3 is a scheme of an apparatus for locking hydraulic devices of the work vehicle;

### DETAILED DESCRIPTION OF THE INVENTION

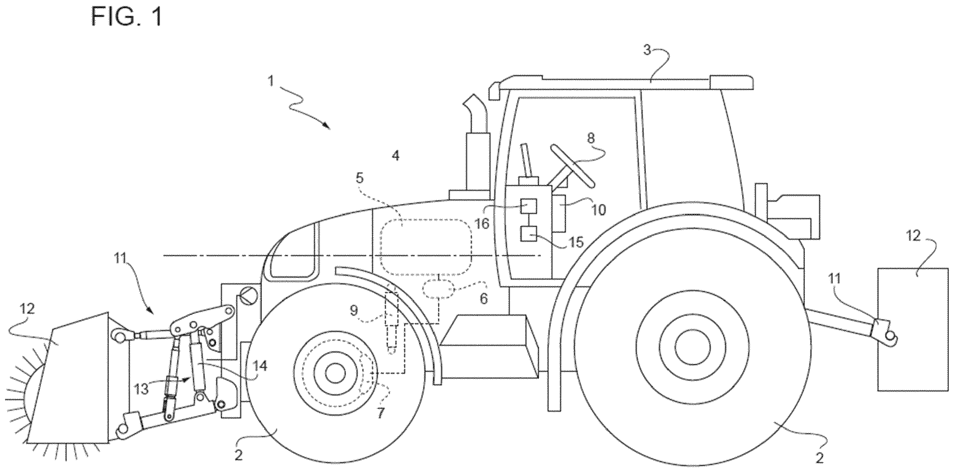

Figure 1 shows a work vehicle 1, in particular a tractor, with two pairs of wheels 2, a cab 3, and a propulsion assembly or powertrain 4 configured to drive the wheels 2, such that the vehicle 1 can travel along an advancing direction A.

Specifically, powertrain 4 comprises an engine 5 and a transmission assembly or drivetrain 6 configured to deliver power from the engine 5 to at least one of the two pairs of wheels 2, in particular the front one.

Drivetrain 6 may comprise known and not shown hydraulic devices, such as a torque converter, a hydrostatic transmission, pumps, servo or shut-off valves, actuators, and the like.

Moreover, vehicle 1 comprises a braking assembly 7 and a steering assembly 8, which are respectively configured to brake and steer at least one of the two pairs of wheels 2. As commonly known, assemblies 7, 8 may comprise further known and not shown hydraulic devices. To make an example, it is just sufficient to refer to power steering and to power brake. More specifically, hydraulic steering bars are known for steering assembly 8.

In addition, vehicle 1 comprises a suspension assembly 9 configured to suspend the wheels 2. Even suspension assembly 9 may comprise known and not shown hydraulic devices, such as a device to lift and lower the wheels 2 with respect to cab 3.

Assemblies 4, 7, 8, 9 can be conceptually grouped into an overall operative assembly configured to operate on the wheels 2. Therefore, the operative assembly optionally comprises each of the assemblies 4, 7, 8, 9. Precisely, the operative assembly is configured to drive, steer, brake, and suspend the wheels 2.

Cab 3 defines an inner space of vehicle 1, in which a driver can enter to drive vehicle 1.

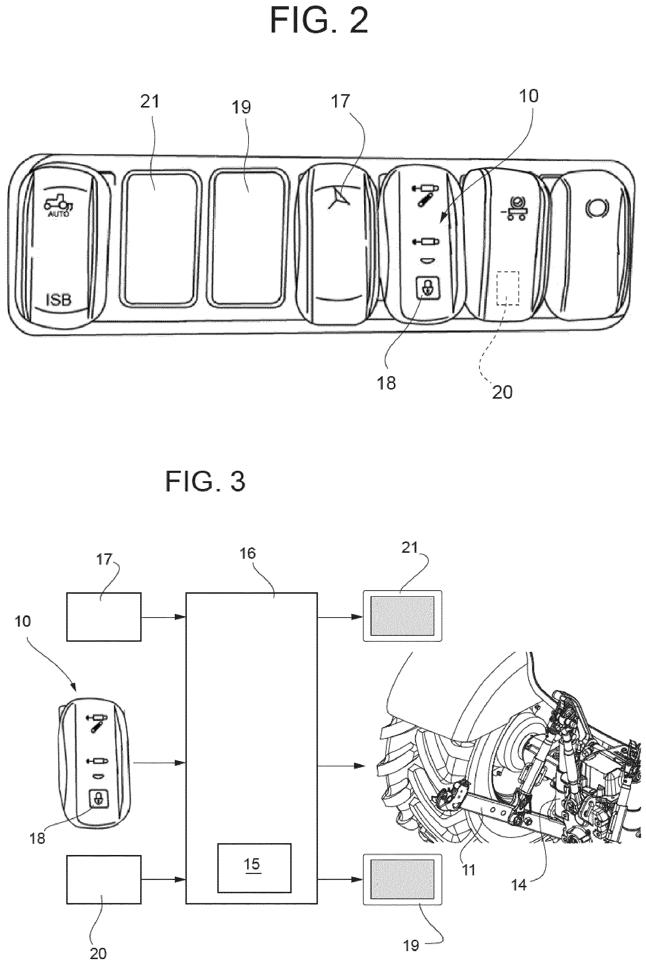

Figure 2 shows a portion of the above inner space, in which a dashboard or control panel 10 is present.

Actually, the dashboard 10 needs not to be arranged in the inner space. According to merely possible examples, the dashboard 10 may be accessible by the driver from the outside of vehicle 1.

Indeed, the dashboard 10 may comprise not only command members for driving vehicle 1, such as an accelerator lever, but even command members for driving implements, tools, or mechanisms of vehicle 1.

In general, for the sake of conciseness, the expression implement will also hereinafter include the meaning of the terms tool and mechanism, without any loss of generality.

Vehicle 1 optionally comprises at least one hitch 11, in particular a front and a rear hitch 11, for the attachment of corresponding implements 12.

Moreover, apart from the above-mentioned operative assembly, vehicle 1 further comprises a hydraulic assembly 13, in turn comprising at least one hydraulic device 14.

Specifically, the hydraulic device 14 is configured or controllable to drive, i.e. to at least move one of the implements 12.

More specifically, the hydraulic device 14 is coupled to the relevant implement 12, such that an operation of the hydraulic device 14 causes a movement of at least one component of the implement 12.

The implements 12 are not limited by the ones attached to the hitches 11. Further implements 12 may form part of vehicle 1. For example, vehicle 1 may comprise an articulated mechanism or an arm ending with a tool, such as a fork, a bucket, an auger, and etcetera. Similarly, further implements 12 may be provided in the form of dumpers, movable doors, and the like.

With respect to one of the hitches 11, in particular the front one, the hydraulic device 14 is configured to raise and lower the hitch 11, thereby moving the attached implement 12 accordingly.

In addition or alternatively, the hydraulic device 14 may drive the implement 12 in a direct manner.

More in general, the hydraulic device 14 moves the corresponding implement 12 in the meaning that at least one component thereof has a movement or is driven by the hydraulic device 14.

Preferably, the hydraulic device 14 is or comprises a hydraulic actuator, like a hydraulic cylinder, or a electronically controllable hydraulic device, such as a valve device, for supplying the implement 12 with an adjusted volume flow of liquid, for example a servo-valve with one or more adjustable openings.

According to the invention, the vehicle 1 comprises a locking apparatus for locking or inhibiting an operation of the hydraulic device 14. In other words, the locking apparatus is suitable for forbidding the hydraulic device 14 to move or cause a movement of a component of the corresponding implement 12.

The locking apparatus comprises a determination unit 15 configured to determine a quantity indicative of a speed of vehicle 1. More precisely, the speed is the linear speed of vehicle 1 along the direction A.

For example, the determination unit 15 comprises a transducer configured to detect the quantity and to generate a corresponding signal. Additionally or alternatively, the determination unit 15 comprises an estimator or an observer to estimate the quantity, e.g. based on appropriate measurements or on the controls to which the powertrain 4 is subjected.

The locking apparatus further comprises a control unit 16.

Control unit 16 may comprise the determination unit 15. Furthermore, control unit 16 may be configured to control the powertrain 4 or, more in general, the above-mentioned operative assembly.

Control unit 16 is coupled to the determination unit 15 and is configured to acquire information associated to the quantity determined by the determination unit 15. For example, control unit 16 receives the signal generated by the transducer and extracts the information therefrom.

Control unit 16 is further configured to output a locking signal based on the acquired information.

As it will be clearer in the following, the locking signal is at least useful for locking the operation of the hydraulic device 14.

With greater detail, control unit 16 outputs the locking signal when the acquired information corresponds to the quantity indicating that the speed has exceeded a threshold value. The threshold value is preferably stored on control unit 16; for example, the threshold value is between 1 and 30 km/h, preferably between 5 and 15 km/h.

Conveniently, vehicle 1, more precisely the dashboard 10 comprises a setting member 17, e.g. a lever, a knob, or a button, being operable by the driver to set the threshold value.

Precisely, the setting member 17 emits a setting signal based on how the driver operates it; the setting member 17 is coupled to control unit 16, such that the control unit 16 reads the setting signal and accordingly sets the threshold value.

According to an embodiment, which is the one illustrated in figures 2 and 3, vehicle 1, more precisely the dashboard 10 further comprises a master switch 18, which is operable by the driver to lock the operation of the hydraulic device 14 and, more in general, preferably, of the entire hydraulic assembly 13.

Vehicle 1, more precisely the dashboard 10, further comprises a signaling device 19 configured to emit a warning signal that warns the driver to operate the master switch 18 to lock the operation of the hydraulic device 14.

Control unit 16 is coupled to the signaling device 19 and is configured to control the signaling device 19, such that the latter emits the warning signal when the locking signal is outputted.

With greater detail, control unit 16 is also coupled to the master switch 18. When operated, the master switch 18 is configured to output a further locking signal, which is read by control unit 16. Then, control unit 16 is configured to lock the operation of the hydraulic device 14 while reading the further locking signal.

For example, the signaling device 19 may comprise a display, a buzzer, a siren, a warning light, a sound emitter, a combination thereof, and the like. Therefore, the warning signal may be a light and/or acoustic signal.

Optionally, control unit 16 is configured to control the signaling device 19 in order to stop the signaling device 19 into emitting the warning signal when the master switch 18 is operated to lock the operation of the hydraulic device 14 or after a time interval is elapsed from the output of the locking signal. According to a further alternative, vehicle 1, more precisely the dashboard 10 may comprise an acknowledge command 20, which is operable by the driver to acknowledge receipt of the warning signal. Then, control unit 16 stops the emission of the warning signal when the acknowledge command 20 is operated.

According to a further embodiment, control unit 16 is configured to lock, in particular directly, the operation of the hydraulic device 14 based on the outputted locking signal.

Specifically, control unit 16 locks the hydraulic device 14 while the locking signal is outputted. In other words, the locking signal is outputted during all the time in which the speed of vehicle 1 exceed the threshold value; then, control unit 16 locks the hydraulic device 14 during this time in which the locking signal is outputted.

Preferably, the hydraulic device 14 is actually locked only when inactive. In other words, if the hydraulic device 14 is operative, i.e. the hydraulic device 14 is moving at least a component of the implement 12, control unit 16 does not lock the operation of the hydraulic device 14 until the operation does not terminate. Hence, control unit 16 waits for the ending of the operation of the hydraulic device 14, even if the locking signal is outputted. Then, when the operation of the hydraulic device 14 ends, control unit 16 locks the operation of the hydraulic device 14 if the locking signal is outputted.

Therefore, control unit 16 is configured to determine if the hydraulic device 14 is inactive, which means that the hydraulic device 14 is not moving any component of the implement 12. Then, control unit 16 is configured to lock the operation of the hydraulic device 14 upon determining the inactivity thereof and while the locking signal is outputted.

Clearly, the lock or inhibition of the operation of the hydraulic device 14 corresponds to a condition in which control unit 16 does not operate the hydraulic device 14, even if the driver should accidentally manipulate a command member of the dashboard 10 configured to operate the hydraulic device 14.

This holds as long as the locking signal is outputted; otherwise, control unit 16 does not lock the hydraulic device when the locking signal is not outputted, i.e. when the speed of vehicle 1 is below the threshold value.

Optionally, vehicle 1, more precisely the dashboard 10 further comprises a further signaling device 21, which is configured to emit a further warning signal for warning the driver to stop operating the hydraulic device 14.

Control unit 16 is further configured to determine if the hydraulic device 14 is operating, i.e. if the hydraulic device 14 is causing the movement of at least one component of the implement 12. Then, control unit 16 is configured to control the signaling device 21, such that the signaling device 21 emits the further warning signal, while control unit 16 determines that the hydraulic device 14 is operating and the locking signal is outputted.

Control unit 16 stops the emission of the further warning signal when the hydraulic device 14 ends its operation or when the locking signal is not any more outputted.

The signaling device 21 may be constructively and functionally similar to the signaling device 19. Therefore, everything disclosed regarding the signaling device 19 might hold also for the signaling device 21.

In view of the foregoing, a method for controlling vehicle 1 has the following steps:
- determining a quantity indicative of a speed of vehicle 1;
- acquiring information associated to the determined quantity;
- outputting a locking signal based on the acquired information; and
- locking the operation of the hydraulic device 14 based on the outputted locking signal.

In particular, the operation of the hydraulic device 14 is locked while the locking signal is outputted.

More in particular, the operation of the hydraulic device 14 is locked as soon as the hydraulic device 14 is inactive while the locking signal is outputted.

A possible further step of the method may be the one of warning the driver to stop operating the hydraulic device 14 while the latter is operating and while the locking device is outputted.

Alternatively, a further step of the method may be the one of warning the driver to lock the operation of the hydraulic device 14 by means of the master switch 18 when the locking signal is outputted.

The above method may be carried out by the control unit 16. Control unit 16 would indeed execute a computer program comprising instructions causing the same control unit 16 to carry out the disclosed method.

The computer program may be stored on a computer-readable medium.

In view of the foregoing, the advantages of vehicle 1 and of the method according to the invention are apparent.

Thanks to the outputted locking signal, the driver cannot forget to lock the hydraulic assembly 13; therefore, a plurality of risks is completely avoided. Especially, even if the driver should accidentally command the hydraulic device 14, this latter would not operate if the speed of vehicle 1 exceeds the threshold.

The output of the locking signal is objectively based on a determined speed of vehicle 1. The possibility of setting the threshold value increases the flexibility of the locking apparatus in respect of the needs of the driver.

Eventually, it is clear that modifications can be made to the described vehicle 1 and method, which do not extend beyond the scope of protection defined by the claims.

For example, the operative assembly is not actually linked to the other disclosed features of the locking apparatus, unless for defining that the hydraulic assembly 13 is different and separated from the operative assembly. When this definition should be unnecessary, the operative assembly would have no actual role with respect to the invention and can be therefore removable from claims.

## Claims

1. A work vehicle (1) comprising
- at least one pair of wheels (2);
- an operative assembly (4, 7, 8, 9) configured to drive, steer, brake, and suspend the wheels (2);
- a hydraulic assembly (13) being apart from the operative assembly and comprising at least one hydraulic device (14);
- determination means (15) for determining a quantity indicative of a speed of the work vehicle (1); and
- a control unit (16) configured to acquire a piece of information associated to the determined quantity from the determination means (15), and to output a locking signal based on the acquired piece of information;
the locking signal being useful for locking an operation of the hydraulic device (14).

2. The work vehicle of claim 1, wherein the control unit (16) is configured to output the locking signal when the acquired piece of information corresponds to the quantity indicating that the speed has exceeded a threshold value.

3. The work vehicle of claim 2, further comprising a setting member (17), which is operable by a driver to set the threshold value.

4. The work vehicle of any of the foregoing claims, further comprising a master switch (18), which is operable by a driver to lock the operation of the hydraulic device (14), and a signaling device (19) configured to emit a warning signal for warning the driver to operate the master switch (18) to lock the operation of the hydraulic device (14);
wherein the control unit (16) is configured to control the signaling device (19), such that the signaling device (19) emits the warning signal, when the locking signal is outputted.

5. The work vehicle of any of claims 1 to 3, wherein the control unit (16) is configured to lock the operation of the hydraulic device (14) based on the outputted locking signal.

6. The work vehicle of claim 5, wherein the control unit (16) is configured to lock the operation of the hydraulic device (14) while the locking signal is outputted.

7. The work vehicle of claim 5, wherein the control unit (16) is configured to determine if the hydraulic device (14) is inactive and to lock the operation of the hydraulic device (14) upon determining that the hydraulic device (14) is inactive while the locking signal is outputted.

8. The work vehicle of any of claims 5 to 7, further comprising a signaling device (21) configured to emit a warning signal for warning a driver to stop operating the hydraulic device (14); wherein the control unit (16) is configured to determine if the hydraulic device (14) is operating and to control the signaling device (21), such that the signaling device (21) emits the warning signal, while determining that the hydraulic device (14) is operating and while the locking signal is outputted.

9. The work vehicle of any of the foregoing claims, further comprising an implement (12) coupled to the hydraulic device (14) such that the operation of the hydraulic devices (14) would cause a movement of at least one component of the implement (12).

10. A method for controlling a work vehicle (1) according to any of the foregoing claims, the method comprising the steps of:
- determining a quantity indicative of a speed of the work vehicle (1);
- acquiring a piece of information associated to the determined quantity;
- outputting a locking signal based on the acquired piece of information; and
- locking an operation of the hydraulic device (14) based on the outputted locking signal.

11. The method of claim 10, wherein the operation of the hydraulic device (14) is locked while the locking signal is outputted.

12. The method of claim 10, wherein the operation of the hydraulic device (14) is locked as soon as the hydraulic device (14) is inactive while the locking signal is outputted.

13. The method of any of claims 10 to 12, further comprising the step of:
- warning a driver to stop operating the hydraulic device (14) while the hydraulic device (14) is operating and the locking signal is outputted; or
- warning a driver to lock the operation of the hydraulic device (14) by means of a master switch (18) of the work vehicle (1) when the locking signal is outputted.

14. A computer program comprising instructions which, when the program is executed by the control unit (16) of a work vehicle (1) of any of claims 1 to 9, cause the control unit (16) to carry out the method of any of claims 10 to 13.

15. A computer-readable medium having stored thereon the computer program of claim 14.
